# EUROPEAN PATENT APPLICATION

(11) **EP 3 996 467 A1**
(43) Date of publication of application: **11.05.2022**
(21) Application number: 21839312.2
(22) Date of filing: 02.07.2021
(51) Int. Cl.: H04W 92/20, H04W 28/12, H04W 80/02

(54) **COMMUNICATION DEVICE, METHOD, AND RECORDING MEDIUM**

(30) Priority: 08.09.2020 JP 2020150226
(71) Applicant: NEC Corporation, Minato-ku, Tokyo 108-8001 (JP)
(72) Inventor: DENG, Lianjun, Tokyo 108-8001 (JP)
(74) Representative: MacDougall, Alan John Shaw
(86) International application number: PCT/JP2021/025093
(87) International publication number: WO 2022/054383

(57) **Abstract**

[Problem]

When the number of data radio bearers increases, the number of DL user data messages increases, and as a result, many communication bands in a transmission path are consumed.

[Solution]

A first message for requesting a report of a data transmission status in a plurality of data radio bearers among first bearers representing data radio bearers established in relation to a second communication device is generated, and the first message is transmitted to the second communication device.

## Description

### [Technical Field]

The present invention generally relates to a mobile communication network.

### [Background Art]

In a third generation partnership project (3GPP) system, flow control is defined. As one flow control, it is defined that a gNB distributed unit (gNB-DU) transmits, with respect to each data radio bearer (DRB), a downlink data delivery status (DDDS) message to a gNB central unit (gNB-CU) and thereby reports a transmission status of data with respect to each data radio bearer.

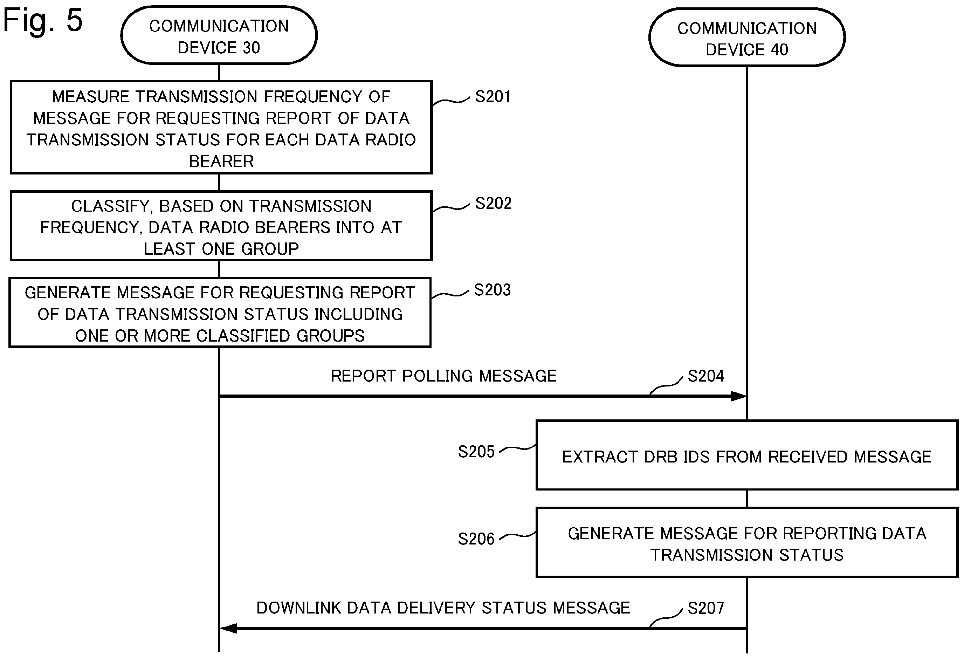

NPL 1 (e.g., Figure 5.4.2.1-1), for example, discloses processing as described above.

A DDDS message is transmitted for each data radio bearer, and therefore as the number of data radio bearers increases, the number of DDDS messages increases. Therefore, many communication bands in a transmission path between a gNB-CU and a gNB-DU are consumed, and therefore a technique for reducing consumption of a communication band in a transmission path by decreasing the number of DDDS messages is disclosed (see, for example, PTL 1).

PTL 1 discloses a technique in which a master node or a CU divides establishment requests of data radio bearers being transmitted from the master node or the CU to a secondary node or a DU into groups, based on a condition specified from a mobile management entity (MME), and the secondary node or the DU transmits a DDDS message for each group.

### [Citation List]

### [Non Patent Literature]

[NPL 1] 3GPP TS 38.425 V16.1.0 "3rd Generation Partnership Project; Technical Specification Group Radio Access Network; NG-RAN; NR user plane protocol (Release 15)"

### [Patent Literature]

[PTL 1] International Publication No. WO2020/026835

### [Summary of Invention]

### [Technical Problem]

In flow control, a DL user data message is also defined, but a DL user data message is also transmitted for each DRB. Therefore, when the number of DRBs increases, the number of DL user data messages increases, and therefore many communication bands in a transmission path are consumed.

Even when the number of DDDS messages is decreased by using the technique disclosed in PTL 1, the number of DL user data messages is not decreased, and therefore an effect of reducing consumption of a communication band in a transmission path is limited.

One object of the present disclosure has been made in order to solve the above-described problem and is to provide a communication device, a method, and a program that are capable of reducing consumption of a communication band in a transmission path.

It should be noted that the object is merely one of a plurality of objects being intended to be achieved by a plurality of example embodiments to be disclosed herein. Other objects or problems and new features will become apparent from description or accompanying drawings according to the present description.

### [Solution to Problem]

A communication device according to a first aspect of the present disclosure comprises: a message generation unit that generates a first message for requesting a report of a data transmission status in a plurality of data radio bearers among first bearers representing data radio bearers established in relation to a second communication device; and a communication control unit that transmits the first message to the second communication device.

A communication device according to a second aspect of the present disclosure comprises: a reception unit that receives, from a first communication device, a first message for requesting a report of a data transmission status in a plurality of data radio bearers among first bearers representing data radio bearers established in relation to the first communication device; and a transmission unit that transmits, to the first communication device, a third message for reporting, for at least one data radio bearer each, the data transmission status for data radio bearers from which a report of the data transmission status is requested based on the first message.

A method according to a first aspect of the present disclosure comprises: generating a first message for requesting a report of a data transmission status in a plurality of data radio bearers among first bearers representing data radio bearers established in relation to a second communication device; and transmitting the first message to the second communication device.

A method according to a second aspect of the present disclosure comprises: receiving, from a first communication device, a first message for requesting a report of a data transmission status in a plurality of data radio bearers among first bearers representing data radio bearers established in relation to the first communication device; and transmitting, to the first communication device, a third message for reporting, for at least one data radio bearer each, the data transmission status for data radio bearers from which a report of the data transmission status is requested based on the first message.

### [Advantageous Effects of Invention]

According to the present disclosure, a communication device, a method, and a program that are capable of reducing consumption of a communication band in a transmission path are provided.

### [Brief Description of Drawings]

[Fig. 1] Fig. 1 is an illustrative diagram for illustrating an example of a communication system according to a first example embodiment.
[Fig. 2] Fig. 2 is a sequence diagram for illustrating an operation example of the communication system according to the first example embodiment.
[Fig. 3] Fig. 3 is an illustrative diagram for illustrating an example of a communication system according to a second example embodiment.
[Fig. 4] Fig. 4 is an illustrative diagram for illustrating an example of a report polling message according to the second example embodiment.
[Fig. 5] Fig. 5 is a sequence diagram for illustrating an operation example of the communication system according to the second example embodiment.
[Fig. 6] Fig. 6 is an illustrative diagram for illustrating an example of a DL user data message according to a third example embodiment.
[Fig. 7] Fig. 7 is an illustrative diagram for illustrating a configuration example of a communication device according to example embodiments.

### [Example Embodiment]

Hereinafter, specific example embodiments are described in detail with reference to the drawings. In the drawings, the same element or a relevant element is assigned with the same reference sign, and for simplification in description, overlapping description is omitted as appropriate.

Example embodiments described below can be carried out independently or can be carried out by appropriately combining these example embodiments. A plurality of these example embodiments have new features different from each other. Therefore, the plurality of these example embodiments contribute to achieving objects different from each other or solving problems different from each other and contribute to producing effects different from each other.

### <First Example Embodiment>

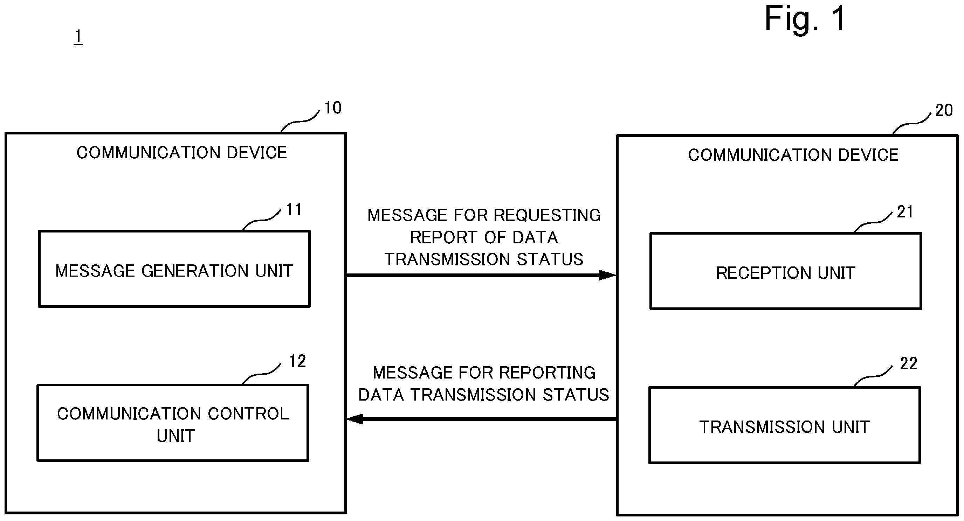

Fig. 1 illustrates a configuration example of a communication system 1 according to the present example embodiment. Elements each illustrated in Fig. 1 may be implemented, for example, as dedicated hardware, software operating on dedicated hardware, or a virtualized function instantiated on an application-platform operating on general purpose hardware.

In the example of Fig. 1, the communication system 1 includes a communication device 10 and a communication device 20.

The communication device 10 and the communication device 20 each may be, for example, a base station (an E-UTRAN Node B, an evolved Node B, an eNodeB, an eNB, or an ng-eNB) using long term evolution (LTE). Alternatively, the communication device 10 and the communication device 20 each may be, for example, a base station (a new generation Node B, a gNodeB, a gNB, or an en-gNB) using new radio (NR). Alternatively, the communication device 10 and the communication device 20 each may be, for example, a central unit (a gNB-central unit (gNB-CU)) or a distributed unit (a gNB-distributed unit (DU)) in a base station using NR. Needless to say, the above description is one example, and is not limited thereto. In particular, the communication device 10 may be a base station hosting a PDCP layer, and the communication device 20 may be a corresponding base station (a corresponding node). A gNB-CU may be divided into a logic node (gNB-CU-user plane (UP)) that controls a user plane and a logic node (gNB-CU-control plane (CP)) that controls a control plane, and a plurality of gNB-DUs may exist. The communication device 10 and the communication device 20 may be communicably connected by an X2 interface or an Xn interface used between base stations, an F1 interface used for communication between a central unit and a distributed unit, or an E1 interface used for communication between a gNB-CU-UP and a gNB-CU-CP. Needless to say, the described interfaces are one example and are not limited thereto.

The communication device 10 includes a message generation unit 11 and a communication control unit 12.

The message generation unit 11 generates a message for requesting a report of a data transmission status in a plurality of data radio bearers among data radio bearers established in relation to the communication device 20.

A message for requesting a report of a data transmission status may be a DL user data message or may be a report polling message to be newly defined according to the present example embodiment.

The communication control unit 12 transmits a message generated by the message generation unit 11 to the communication device 20.

The communication device 20 includes a reception unit 21 and a transmission unit 22.

The reception unit 21 receives, from the communication device 10, a message for requesting a report of a data transmission status in a plurality of data radio bearers among data radio bearers established in relation to the communication device 10.

The transmission unit 22 transmits, to the communication device 10, a message for reporting, for at least one data radio bearer each, a data transmission status for data radio bearers from which a report of data transmission status is requested based on a message for requesting a report of a data transmission status.

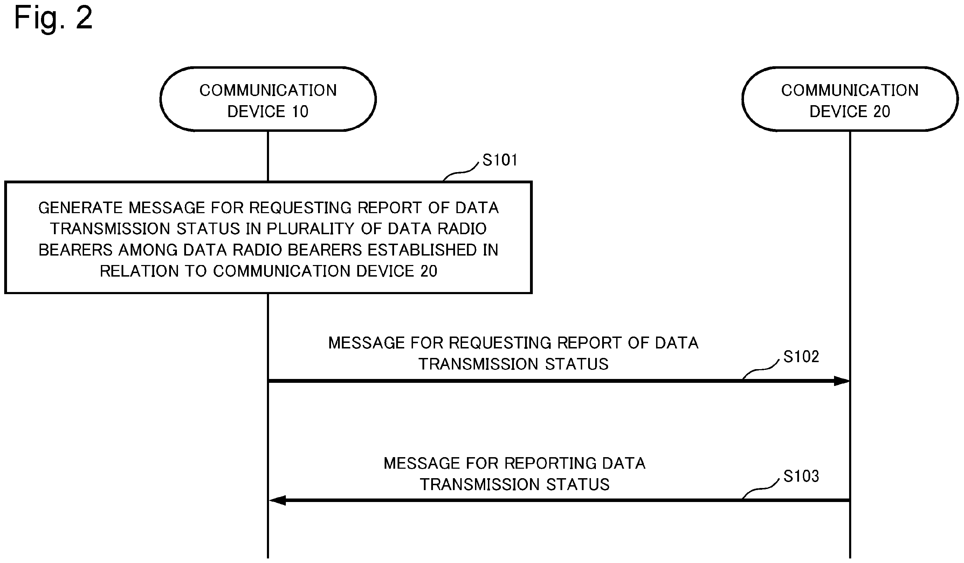

Next, by using Fig. 2, an operation example of the communication system 1 according to the first example embodiment is described. Fig. 2 is a sequence diagram illustrating an operation example of the communication system according to the first example embodiment.

First, the message generation unit 11 generates a message for requesting a report of a data transmission status in a plurality of data radio bearers among data radio bearers established in relation to the communication device 20 (S101). The communication control unit 12 transmits the message generated by the message generation unit 11 to the communication device 20 and the reception unit 21 receives the message transmitted by the communication device 10 (S102). The transmission unit 22 of the communication device 20 transmits, to the communication device 10, a message for reporting, for one or a plurality of data radio bearers each, a data transmission status for data radio bearers from which a data transmission status is requested based on the received message (S103).

As described above, according to the present example embodiment, the communication device 10 generates a message for requesting a report of a data transmission status in a plurality of data radio bearers and transmits the generated message to the communication device 20. In other words, the communication device 10 transmits, to the communication device 20, messages less in number than the plurality of data radio bearers. Therefore, the communication device 10 according to the first example embodiment contributes to prevention of pressure on a transmission path between the communication device 10 and the communication device 20.

### <Second Example Embodiment>

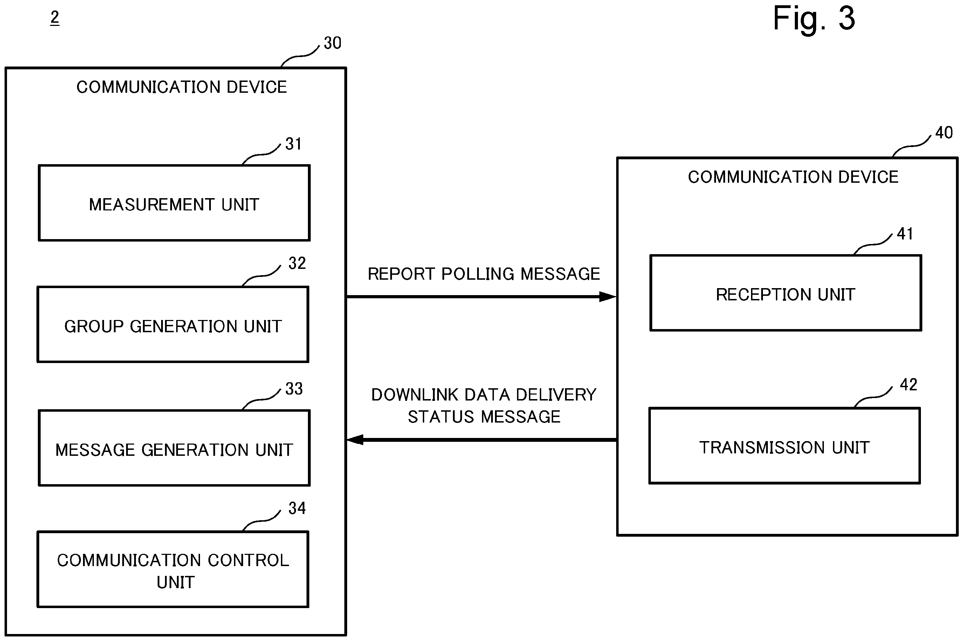

Fig. 3 illustrates a configuration example of a communication system 2 according to the present example embodiment. As illustrated in Fig. 3, the communication system 2 includes a communication device 30 and a communication device 40.

The communication device 30 corresponds to the communication device 10 according to the first example embodiment. The communication device 30 may be, for example, an eNodeB, an eNB, an ng-eNB, a gNodeB, a gNB, an en-gNB, a gNB-CU, a gNB-CU-UP, or a gNB-CU-CP. When, for example, DC (dual connectivity) is executed by the communication device 30 and the communication device 40, the communication device 30 may be a master eNB (MeNB).

The communication device 30 may be a base station hosting a PDCP layer. The communication device 30 performs connection to and communication with the communication device 40 via a wired line or radio. An interface between the communication device 30 and the communication device 40 may be, for example, an X2 interface, an Xn interface, an F1 interface, or an E1 interface.

The communication device 40 corresponds to the communication device 20 according to the first example embodiment. The communication device 40 may be, for example, an eNodeB, an eNB, an ng-eNB, a gNodeB, a gNB, an en-gNB, a gNB-DU, a gNB-CU-UP, or a gNB-CU-CP. When, for example, dual connectivity (DC) is executed by the communication device 30 and the communication device 40, the communication device 40 may be a secondary eNB (SeNB). When the communication device 30 is a gNB-CU, the communication device 40 may be a gNB-DU. When the communication device 30 is a base station hosting a PDCP layer, the communication device 40 may be a corresponding base station (a corresponding node). The communication device 40 performs connection to and communication with the communication device 30 via a wired line or radio.

Next, a configuration example of the communication device 30 is described. The communication device 30 includes a measurement unit 31, a group generation unit 32, a message generation unit 33, and a communication control unit 34.

The measurement unit 31 measures various items relating to a data radio bearer (DRB) being a data radio bearer established in relation to the communication device 40. The measurement unit 31 calculates a transmission frequency of a specific message transmitted via DRBs established in relation to the communication device 40.

The measurement unit 31 may measure the number of transmissions of messages transmitted via DRBs established in relation to the communication device 40 in a predetermined time and calculate, based on the number of transmissions, a transmission frequency of a specific message transmitted via DRBs established in relation to the communication device 40. A message to be measured by the measurement unit 31 is a report polling message. A report polling message is a message for requesting a report of a data transmission status and is generated by the message generation unit 33 to be described later. A message to be measured by the measurement unit 31 may include all messages transmitted via DRBs from the communication device 30 to the communication device 40.

When, for example, a report polling message is transmitted 200 times in one second via a specific DRB, the measurement unit 31 measures the number of transmissions for the specific DRB as 200 and calculates, based on the number of transmissions, a transmission frequency. The measurement unit 31 may determine the measured number of transmissions as a transmission frequency. Alternatively, the measurement unit 31 may measure, for a specific DRB, the number of transmissions of a report polling message every second, and calculate, for example, an average value of the number of transmissions in a fixed time such as ten seconds and the like as a transmission frequency, or calculate a moving average value of the number of transmissions as a transmission frequency. Alternatively, the measurement unit 31 may calculate, as a transmission frequency, a median of the number of transmissions in a fixed time or calculate a transmission frequency, based on a maximum value and a minimum value of the number of transmissions in a fixed time.

The measurement unit 31 executes the measurement based on, among radio protocol layers included on the communication device 30, one or a plurality of layers of a packet data convergence protocol (PDCP) layer, a radio link control (RLC) layer, and a media access control (MAC) layer. The measurement unit 31 may calculate a transmission frequency for DRBs established in relation to the communication device 40 when either or both of a condition in which a new DRB is generated in relation to the communication device 40 and a condition in which an existing DRB is deleted are satisfied.

The group generation unit 32 classifies a DRB established between the communication device 30 and the communication device 40 into one or a plurality of groups. The group generation unit 32 classifies, based on a transmission frequency calculated by the measurement unit 31, DRBs established between the communication device 30 and the communication device 40 into one group or any of a plurality of groups.

Specifically, the group generation unit 32 sets a threshold range relevant to one group or each of a plurality of groups. The group generation unit 32 determines a threshold range including a transmission frequency measured by the measurement unit 31 and classifies, based on the determined threshold range, a DRB established between the communication device 30 and the communication device 40 into one group or any of a plurality of groups.

It is assumed, for example, one group or each of a plurality of groups indicates a group for a low transmission frequency, a group for a middle transmission frequency, and a group for a high transmission frequency. The group generation unit 32 classifies, based on a threshold range including a transmission frequency of each DRB established between the communication device 30 and the communication device 40, DRBs into any one of a group for a low transmission frequency (list ID#1), a group for a middle transmission frequency (list ID#2), and a group for a high transmission frequency (list ID#3). Note that, description has been made assuming that there are three groups to be classified, as one example, but needless to say, the number of groups is not limited to three.

When the measurement unit 31 calculates again a transmission frequency for DRBs established in relation to the communication device 40, the group generation unit 32 may reclassify DRBs into one or a plurality of groups, based on the recalculated transmission frequency.

The message generation unit 33 corresponds to the message generation unit 11 according to the first example embodiment. The message generation unit 33 generates, in addition to the function of the message generation unit 11 according to the first example embodiment, a report polling message with respect to each group classified by the group generation unit 32. The report polling message is a message for requesting a report of a data transmission status in a plurality of DRBs. The message generation unit 33 may generate a report polling message with respect to each single group or may generate a report polling message with respect to a plurality of groups each.

The message generation unit 33 sets a threshold for one group or each of a plurality of groups classified by the group generation unit 32. The message generation unit 33 may generate a report polling message when the number of DRBs classified into one group or each of a plurality of groups exceeds a threshold. In other words, the message generation unit 33 may generate a report polling message in response that the number of DRBs classified into one group or each of a plurality of groups reaches a threshold. A threshold set for one group or each of a plurality of groups may be set as the same value for all groups, may be set as different values for groups, or may be modified in any manner.

The message generation unit 33 may be configured in such a way as to monitor a processing load in the communication device 30. The message generation unit 33 may execute, according to a processing load in the communication device 30, either or both of methods of modifying the threshold and of stopping generation of a report polling message. The message generation unit 33 sets in advance, for the communication device 30, a threshold of a processing load on the communication device 30 and may set a threshold set for groups to be larger or may temporarily stop generation of a report polling message when a processing load on the communication device 30 increases and exceeds a threshold of the processing load. The message generation unit 33 may set, when a processing load on the communication device 30 decreases and becomes lower than a threshold of the processing load, a threshold set for groups to be smaller or may restart, when generation of a report polling message is temporarily stopped, generation of a report polling message. The message generation unit 33 may dynamically modify, in response to modification of a processing load on the communication device 30, a threshold set for groups or may dynamically modify, in response to modification of a processing load on the communication device 30, the number of generations of report polling messages. A threshold of a processing load may be set, for example, for a usage rate of a processor included in the communication device 30, but needless to say, is not limited thereto.

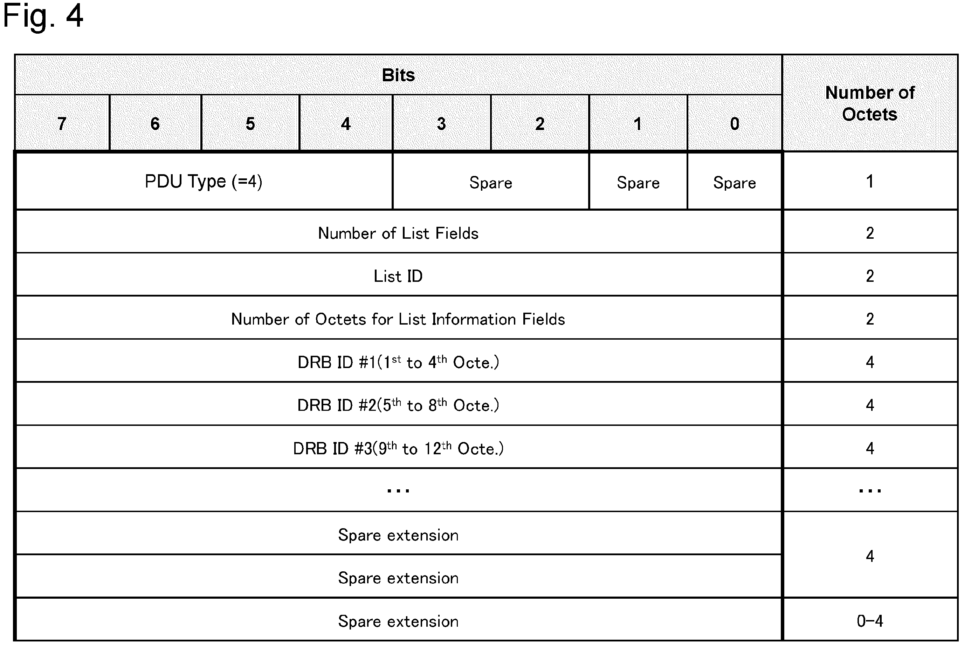

Herein, by using Fig. 4, one example of a report polling message generated by the message generation unit 33 is described. Fig. 4 is a diagram illustrating one example of a report polling message according to the present example embodiment. The report polling message according to the present example embodiment includes, for example, a PDU type, a list flag, the number of list fields, a list ID, the number of octets for list information fields, and a DRB ID. A list according to the present example embodiment may be replaced with a group. For example, a list flag may be replaced with a group flag. The number of list fields may be replaced with the number of group fields, and the number of octets for list information fields may be replaced with the number of octets for group information fields. A report polling message may further include RAN container information defined based on 3GPP TS38.425. The RAN container information includes, for example, assistance info, a report polling flag, and a retransmission flag.

For a PDU type, 4 is set, indicating that a report polling message is related to a plurality of DRBs and is a report polling message for each group.

A list flag is an information element (IE) in which information for discriminating whether a report polling message includes a request for a report of a data transmission status in a plurality of data radio bearers is set.

The number of list fields is an IE in which the number of groups included in a report polling message is set.

A list ID is an IE in which discrimination information of a group is set, and for a list ID, discrimination information of each of groups included in a report polling message is set.

The number of octets for list information fields is an IE in which the number of DRBs classified into groups included in a report polling message is set.

A DRB ID is an IE in which discrimination information for discriminating DRBs is set. For a DRB ID, discrimination information for discriminating DRBs included in a group set in a list ID is set. When, for example, n (n is an integer equal to or more than 1) DRBs are included in a group set in a list ID, discrimination information of an ith (i is an integer which is equal to or more than 1 and equal to or less than n) DRB is set as DRB ID#i. As discrimination information for discriminating DRBs, a tunnel endpoint identifier (TEID) may be used.

Referring back to Fig. 3, the communication control unit 34 is described. The communication control unit 34 corresponds to the communication control unit 12 according to the first example embodiment. Similarly to the communication control unit 12 according to the first example embodiment, the communication control unit 34 transmits a report polling message generated by the message generation unit 33 to the communication device 40. The communication control unit 34 may periodically or non-periodically transmit a report polling message to the communication device 40. Alternatively, the communication control unit 34 may transmit, in response to generation of a report polling message by the message generation unit 33, the report poling message to the communication device 40. The communication control unit 34 receives a message, being transmitted by a transmission unit 42 to be described later, for reporting a data transmission status with respect to one DRB or a plurality of DRBs each.

Next, a configuration example of the communication device 40 is described. The communication device 40 includes a reception unit 41 and a transmission unit 42.

The reception unit 41 receives, from the communication device 30, a report polling message for requesting a report of a data transmission status in DRBs being a plurality of data radio bearers. The reception unit 41 extracts one or a plurality of DRB IDs included in the message.

The transmission unit 42 generates, for DRBs from which a report of a data transmission status is requested based on a report polling message, a message for reporting a data transmission status to one DRB or a plurality of DRBs each and transmits the generated message to the communication device 30. The transmission unit 42 transmits, to the communication device 30, a message for reporting, for one or a plurality of DRB IDs extracted by the reception unit 41, a data transmission status as a response to a message for requesting a report of a data transmission status. A message for reporting a data transmission status may be a downlink data delivery status (DDDS) message.

Next, an example of an operation of the communication system 2 according to the present example embodiment is described by using Fig. 5. Fig. 5 is a sequence diagram for illustrating an operation example of the communication system according to the second example embodiment. In Fig. 5, a message for reporting a data transmission status is referred to as a downlink data delivery status message.

First, the measurement unit 31 measures, with respect to DRBs established between the communication device 30 and the communication device 40, a transmission frequency of a message for requesting a report of a data transmission status for each DRB (S201). Next, the group generation unit 32 classifies, based on the transmission frequency measured by the measurement unit 31, DRBs into one or a plurality of groups (S202). The message generation unit 33 generates a report polling message including one or more classified groups (S203).

Next, the communication control unit 34 transmits the report polling message generated by the message generation unit 33 to the communication device 40 and the reception unit 41 of the communication device 40 receives the report polling message (S204). The reception unit 41 extracts DRB IDs included in the report polling message (S205). The transmission unit 42 generates, as a response to the message, a message for reporting a data transmission status (S206). The transmission unit 42 transmits a downlink data delivery status message to the communication device 30 and the communication control unit 34 receives the downlink data delivery status message (S207).

As described above, according to the present example embodiment, the communication device 30 generates a report polling message for requesting a report of a data transmission status in a plurality of data radio bearers and transmits the generated report polling message to the communication device 40. In this manner, the communication device 30 does not transmit, with respect to a plurality of DRBs established in relation to the communication device 40, a report polling message for each DRB but transmits a report polling message for one group or a plurality of groups each into which a plurality of DRBs established in relation to the communication device 40 are classified. Therefore, the communication device 30 can request, based on less report polling messages than in transmission of a report polling message for each DRB, a report of a data transmission status for each of a plurality of DRBs established in relation to the communication device 40. Therefore, the communication system of the second example embodiment contributes to prevention of pressure of a transmission path between the communication device 30 and the communication device 40.

### <Third Example Embodiment>

The present example embodiment is a modified example of the second example embodiment. According to the above-described second example embodiment, description has been made, assuming that a message for requesting a report of a data transmission status is a report polling message, but an achievement can be made also by using a DL user data message described in TS38.425 V15.6.0. The present example embodiment is an example embodiment using a DL user data message as a message for requesting a report of a data transmission status.

A configuration example and an operation example of a communication system according to the present example embodiment are basically similar to the second example embodiment. Therefore, according to the present example embodiment, description common to the second example embodiment is omitted, as appropriate, and a point different from the second example embodiment is described.

A message generation unit 33 generates a DL user data message being a message for requesting a report of a data transmission status in a plurality of data radio bearers.

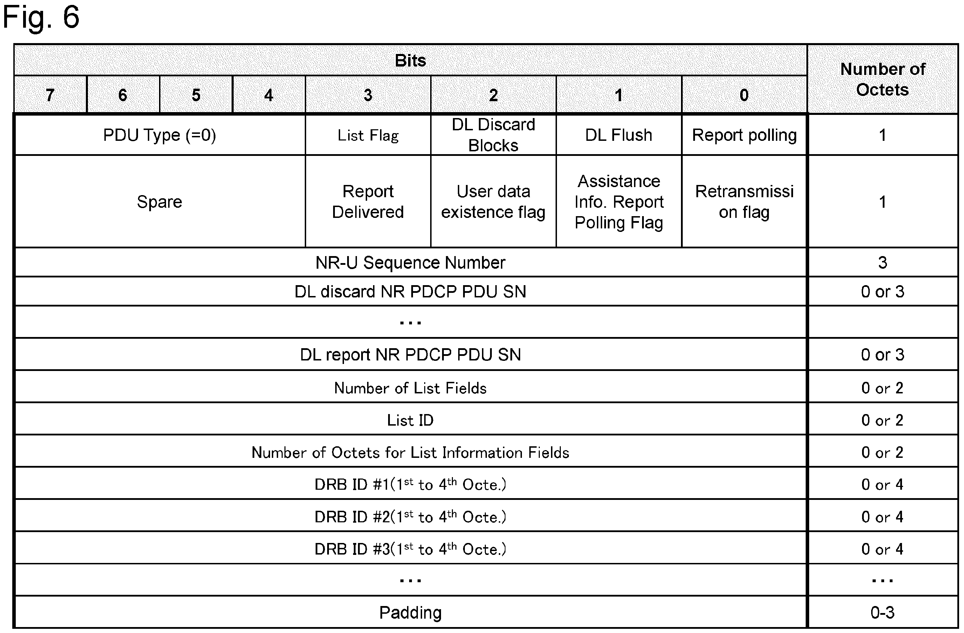

Herein, by using Fig. 6, one example of a DL user data message according to the present example embodiment is described. Fig. 6 is a diagram illustrating one example of a DL user data message according to the third example embodiment.

A DL user data message according to the present example embodiment is a message in which a DL user data message described in TS38.425 V15.6.0 is added with a list flag, the number of list fields, a list ID, the number of octets for list information fields, and a DRB ID. A DL user data message according to the present example embodiment may further include RAN container information defined in 3GPP TS38.425. A list flag, the number of list fields, a list ID, the number of octets for list information fields, and a DRB ID are similar to the second example embodiment, and therefore description thereof is omitted.

In this manner, even when the second example embodiment is modified as in the present example embodiment, an effect similar to the second example embodiment can be acquired.

### <Fourth Example Embodiment>

The present example embodiment is a modified example of the second example embodiment and the third example embodiment. According to the second example embodiment and the third example embodiment, description has been made assuming that the measurement unit 31 measures a transmission frequency for DRBs established in relation to the communication device 40 and the group generation unit 32 classifies, based on the transmission frequency, DRBs into one or a plurality of groups. According to the present example embodiment, a measurement unit measures a data rate for DRBs established in relation to a communication device 40 and a group generation unit classifies, based on the data rate, DRBs into one or a plurality of groups. A configuration example and an operation example of a communication system according to the present example embodiment are basically similar to the second example embodiment and the third example embodiment. Therefore, according to the present example embodiment, description of a configuration and an operation similar to the second example embodiment and the third example embodiment is omitted, as appropriate, and a difference from the second example embodiment and the third example embodiment is described.

A measurement unit 31 measures a data rate of DRBs established in relation to the communication device 40. The measurement unit 31 may calculate a data rate, based on a data amount actually transmitted to the communication device 40 and a time required for the transmission. The measurement unit 31 may measure data amounts of data transmitted via DRBs established in relation to the communication device 40 in a predetermined time, and calculate a data rate by averaging the data amounts in a predetermined time.

Further, the measurement unit 31 may calculate, based on a data amount of data temporarily stored in a buffer provided in a communication device 30, a data rate of DRBs established in relation to the communication device 40. Specifically, the measurement unit 31 may calculate, as a data rate for each DRB, a data rate from a data amount in a transmission buffer of the communication device 30 and a time required for the transmission. More specifically, when a data amount to be held, for a certain DRB, in a transmission buffer by the communication device 30 and to be transmitted in one second is 5 Gbit, the measurement unit 31 may calculate a data rate as 5 Gbps.

The measurement unit 31 may calculate a data rate for DRBs established in relation to the communication device 40 when either or both of a condition in which a new DRB is generated in relation to the communication device 40 and a condition in which an existing DRB is deleted are satisfied.

The group generation unit 32 classifies, based on a data rate for each DRB measured by the measurement unit 31, DRBs into one group or any of a plurality of groups. Specifically, the group generation unit 32 sets a threshold range relevant to one group or each of a plurality of groups. The group generation unit 32 determines a threshold range including a data rate measured by the measurement unit 31 and classifies, based on the determined threshold range, DRBs established between the communication device 30 and the communication device 40 into one group or any of a plurality of groups.

It is assumed that, for example, one group or each of a plurality of groups indicates a group for a low data rate, a group for a middle data rate, and a group for a high data rate. The group generation unit 32 classifies, based on a threshold range including a data rate of DRBs established in relation to the communication device 40, DRBs into any one of a group for a low data rate (list ID#1), a group for a middle data rate (list ID#2), and a group for a high data rate (list ID#3). As one example, description has been made assuming that there are three groups to be classified, but needless to say, the number of groups is not limited to three.

When the measurement unit 31 calculates again a data rate for DRBs established in relation to the communication device 40, the group generation unit 32 may reclassify DRBs into one or a plurality of groups, based on the data rate calculated again.

In this manner, even when the second example embodiment and the third example embodiment are modified as in the present example embodiment, an effect similar to the second example embodiment and the third example embodiment can be acquired.

The present example embodiment may be combined with the second example embodiment or may be combined with the third example embodiment. Specifically, the measurement unit 31 may calculate, with respect to DRBs established between the communication device 30 and the communication device 40, either or both of a transmission frequency and a data rate. The group generation unit 32 may classify, based on either or both of a transmission frequency and a data rate calculated by the measurement unit 31, DRBs established between the communication device 30 and the communication device 40 into one group or any of a plurality of groups. In this manner, even when the present example embodiment and the second example embodiment are combined or the present example embodiment and the third example embodiment are combined, an effect similar to the above-described example embodiments can be acquired.

### <Another Example Embodiment>

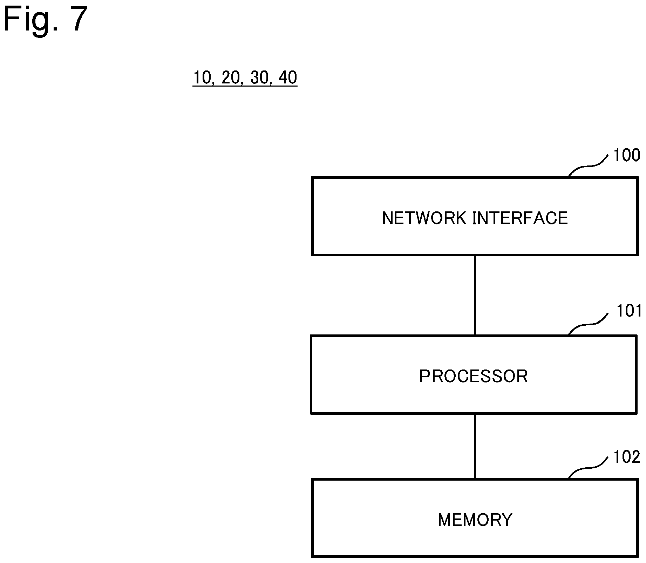

The communication devices 10, 20, 30, and 40 (hereinafter, referred to as a communication device 10 and the like) according to the above-described example embodiments may include a hardware configuration as described below. Fig. 7 is a block diagram exemplarily illustrating a hardware configuration of a computer (information processing device) capable of achieving a communication device according to example embodiments.

Referring to Fig. 7, the communication device 10 and the like include a network-interface 100, a processor 101, and a memory 102. The network-interface 100 is used for communication with another radio communication device including a plurality of communication terminals. The network-interface 100 may include, for example, a network interface card (NIC) conforming to IEEE 802.11 series, IEEE 802.3 series, or the like.

The processor 101 reads software (a computer program) from the memory 102, executes the read software, and thereby executes processing of the communication device 10 and the like described by using a flowchart and a sequence diagram according to the above-described example embodiments. The processor 101 may be, for example, a microprocessor, a micro processing unit (MPU), or a central processing unit (CPU). The processor 101 may include a plurality of processors.

The memory 102 is configured by a combination of a volatile memory and a non-volatile memory. The memory 102 may include a storage disposed separately from the processor 101. In this case, the processor 101 may access the memory 102 via an I/O interface which is not illustrated.

In the example of Fig. 7, the memory 102 is used for storing software modules. The processor 101 reads the software modules from the memory 102, executes the read software modules, and thereby becomes capable of executing processing of the communication device 10 and the like described according to the above-described example embodiments.

As described by using Fig. 7, each of processors included in the communication device 10 and the like executes one or a plurality of programs including instructions for causing a computer to execute an algorithm described by using relevant drawings.

In the above-described example, a program is stored by using various types of non-transitory computer readable medium and are able to be supplied to a computer. A non-transitory computer readable medium includes various types of tangible storage medium. Examples of a non-transitory computer readable medium include a magnetic recording medium (e.g., a flexible disk, a magnetic tape, and a hard disk drive) and a magneto-optical recording medium (e.g., a magneto-optical disc). Examples of a non-transitory computer readable medium further include a CD-read only memory (ROM), a CD-R, and a CD-R/W. Examples of a non-transitory computer readable medium further include a semiconductor memory. A semiconductor memory includes, for example, a mask ROM, a programmable ROM (PROM), an erasable PROM (EPROM), a flash ROM, and a random access memory (RAM). A program may be supplied to a computer by various types of transitory computer readable medium. Examples of a transitory computer readable medium include an electric signal, an optical signal, and an electromagnetic wave. A transitory computer readable medium is able to supply a program to a computer via a wired communication path such as electric line, an optical fiber, and the like or a radio communication path.

The present disclosure is not limited to the example embodiments and can be appropriately modified without departing from the spirit. The present disclosure may be carried out by appropriately combining the example embodiments.

The whole or part of the example embodiments disclosed above can be described as, but not limited to, the following supplementary notes.

### (Supplementary note 1)

A first communication device including:
a message generation unit that generates a first message for requesting a report of a data transmission status in a plurality of data radio bearers among first bearers representing data radio bearers established in relation to a second communication device; and
a communication control unit that transmits the first message to the second communication device.

### (Supplementary note 2)

The first communication device according to supplementary note 1, further including
a group generation unit that classifies the first bearers into one group or any of a plurality of groups, wherein
the message generation unit generates the first message for each of the classified group.

### (Supplementary note 3)

The first communication device according to supplementary note 2, further including
a measurement unit that calculates at least one of a transmission frequency of a second message transmitted via each of the first bearers and a data rate of each of the first bearers, wherein
the group generation unit classifies, based on at least one of the transmission frequency and the data rate, the first bearers into the one group or any of the plurality of groups.

### (Supplementary note 4)

The first communication device according to supplementary note 3, wherein the measurement unit measures the number of transmissions of the second message transmitted via each of the first bearers in a predetermined time and calculates, based on the number of the transmissions, the transmission frequency.

### (Supplementary note 5)

The first communication device according to supplementary note 3 or 4, wherein the measurement unit measures a data amount of data transmitted via each of the first bearers in a predetermined time, and calculates the data rate by averaging the data amount in the predetermined time.

### (Supplementary note 6)

The first communication device according to any one of supplementary notes 3 to 5, wherein the measurement unit calculates the data rate of each of the first bearers, based on, among data temporarily accumulated in a buffer provided in the first communication device, a data amount of data being transmitted via each of the first bearers in a predetermined time.

### (Supplementary note 7)

The first communication device according to supplementary note 4 or 5, wherein the measurement unit executes the measurement, based on at least one layer of a packet data convergence protocol (PDCP) layer, a radio link control (RLC) layer, and a media access control (MAC) layer.

### (Supplementary note 8)

The first communication device according to any one of supplementary notes 3 to 7, wherein the group generation unit determines, among a plurality of threshold ranges relevant to the one group or each of the plurality of groups, a threshold range including at least one of the transmission frequency and the data rate of each of the first bearers and classifies, based on the determined threshold range, the first bearers into the one group or any of the plurality of groups.

### (Supplementary note 9)

The first communication device according to any one of supplementary notes 3 to 8, wherein
the message generation unit generates the first message in response that the number of data radio bearers classified into each of the one group or the plurality of groups reaches a predetermined threshold, and
the communication control unit transmits, in response that the first message is generated, the first message to the second communication device.

### (Supplementary note 10)

The first communication device according to supplementary note 9, wherein the message generation unit monitors a processing load in the first communication device and, according to the processing load, executes at least one of modifying the predetermined threshold and stopping generation of the first message.

### (Supplementary note 11)

The first communication device according to any one of supplementary notes 3 to 10, wherein
the measurement unit calculates at least one of the transmission frequency and the data rate with respect to the first bearers when at least one of a case where a new data radio bearer is generated and a case where an existing data radio bearer is deleted is satisfied, and
the group generation unit reclassifies, based on at least one of the transmission frequency and the data rate, the first bearers into the one group or the plurality of groups.

### (Supplementary note 12)

The first communication device according to any one of supplementary notes 2 to 11, wherein the first message includes first discrimination information of a group included in the first message and second discrimination information of a data radio bearer classified into a group included in the first message.

### (Supplementary note 13)

The first communication device according to supplementary note 12, wherein the first message is a report polling message.

### (Supplementary note 14)

The first communication device according to supplementary note 12, wherein the first message is a DL user data message.

### (Supplementary note 15)

The first communication device according to any one of supplementary notes 1 to 14, wherein
the first communication device is a central unit in a base station, and
the second communication device is a distributed unit in the base station.

### (Supplementary note 16)

The first communication device according to any one of supplementary notes 1 to 14, wherein
the first communication device is a first base station, and
the second communication device is a second base station.

### (Supplementary note 17)

A second communication device including:
a reception unit that receives, from a first communication device, a first message for requesting a report of a data transmission status in a plurality of data radio bearers among first bearers representing data radio bearers established in relation to the first communication device; and
a transmission unit that transmits, to the first communication device, a third message for reporting, for at least one data radio bearer each, the data transmission status for data radio bearers from which a report of the data transmission status is requested based on the first message.

### (Supplementary note 18)

The second communication device according to supplementary note 17, wherein the third message is a downlink data delivery status message.

### (Supplementary note 19)

A method including:
generating a first message for requesting a report of a data transmission status in a plurality of data radio bearers among first bearers representing data radio bearers established in relation to a second communication device; and
transmitting the first message to the second communication device.

### (Supplementary note 20)

A method including:
receiving, from a first communication device, a first message for requesting a report of a data transmission status in a plurality of data radio bearers among first bearers representing data radio bearers established in relation to the first communication device; and
transmitting, to the first communication device, a third message for reporting, for at least one data radio bearer each, the data transmission status for data radio bearers from which a report of the data transmission status is requested based on the first message.

### (Supplementary note 21)

A program causing a computer to execute processing of:
generating a first message for requesting a report of a data transmission status in a plurality of data radio bearers among first bearers representing data radio bearers established in relation to a second communication device; and
transmitting the first message to the second communication device.

### (Supplementary note 22)

A program causing a computer to execute processing of:
receiving, from a first communication device, a first message for requesting a report of a data transmission status in a plurality of data radio bearers among first bearers representing data radio bearers established in relation to the first communication device; and
transmitting, to the first communication device, a third message for reporting, for at least one data radio bearer each, the data transmission status for data radio bearers from which a report of the data transmission status is requested based on the first message.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2020-150226, filed on September 8, 2020, the disclosure of which is incorporated herein in its entirety by reference.

### [Reference signs List]

- 1: Communication system
- 2: Communication system
- 10: Communication device
- 11: Message generation unit
- 12: Communication control unit
- 20: Communication device
- 21: Reception unit
- 22: Transmission unit
- 30: Communication device
- 31: Measurement unit
- 32: Group generation unit
- 33: Message generation unit
- 34: Communication control unit
- 40: Communication device
- 41: Reception unit
- 42: Transmission unit
- 100: Network-interface
- 101: Processor
- 102: Memory

## Claims

1. A first communication device comprising:
message generation means for generating a first message for requesting a report of a data transmission status in a plurality of data radio bearers among first bearers representing data radio bearers established in relation to a second communication device; and
communication control means for transmitting the first message to the second communication device.

2. The first communication device according to claim 1, further comprising
group generation means for classifying the first bearers into one group or any of a plurality of groups, wherein
the message generation means generates the first message for each of the classified group.

3. The first communication device according to claim 2, further comprising
measurement means for calculating at least one of a transmission frequency of a second message transmitted via each of the first bearers and a data rate of each of the first bearers, wherein
the group generation means classifies, based on at least one of the transmission frequency and the data rate, the first bearers into the one group or any of the plurality of groups.

4. The first communication device according to claim 3, wherein the measurement means measures a number of transmissions of the second message transmitted via each of the first bearers in a predetermined time, and calculates, based on the number of the transmissions, the transmission frequency.

5. The first communication device according to claim 3 or 4, wherein the measurement means measures a data amount of data transmitted via each of the first bearers in a predetermined time, and calculates the data rate by averaging the data amount in the predetermined time.

6. The first communication device according to any one of claims 3 to 5, wherein the measurement means calculates the data rate of each of the first bearers, based on, among data temporarily accumulated in a buffer provided in the first communication device, a data amount of data being transmitted via each of the first bearers in a predetermined time.

7. The first communication device according to claim 4 or 5, wherein the measurement means executes the measurement, based on at least one layer of a packet data convergence protocol (PDCP) layer, a radio link control (RLC) layer, and a media access control (MAC) layer.

8. The first communication device according to any one of claims 3 to 7, wherein the group generation means determines, among a plurality of threshold ranges relevant to the one group or each of the plurality of groups, a threshold range including at least one of the transmission frequency and the data rate of each of the first bearers, and classifies, based on the determined threshold range, the first bearers into the one group or any of the plurality of groups.

9. The first communication device according to any one of claims 3 to 8, wherein
the message generation means generates the first message in response that a number of data radio bearers classified into each of the one group or the plurality of groups reaches a predetermined threshold, and
the communication control means transmits, in response that the first message is generated, the first message to the second communication device.

10. The first communication device according to claim 9, wherein the message generation means monitors a processing load in the first communication device and, according to the processing load, executes at least one of modifying the predetermined threshold and stopping generation of the first message.

11. The first communication device according to any one of claims 3 to 10, wherein
the measurement means calculates at least one of the transmission frequency and the data rate with respect to the first bearers when at least one of a case where a new data radio bearer is generated and a case where an existing data radio bearer is deleted is satisfied, and
the group generation means reclassifies, based on at least one of the transmission frequency and the data rate, the first bearers into the one group or the plurality of groups.

12. The first communication device according to any one of claims 2 to 11, wherein the first message includes first discrimination information of a group included in the first message and second discrimination information of a data radio bearer classified into a group included in the first message.

13. The first communication device according to claim 12, wherein the first message is a report polling message.

14. The first communication device according to claim 12, wherein the first message is a DL user data message.

15. The first communication device according to any one of claims 1 to 14, wherein
the first communication device is a central unit in a base station, and
the second communication device is a distributed unit in the base station.

16. The first communication device according to any one of claims 1 to 14, wherein
the first communication device is a first base station, and
the second communication device is a second base station.

17. A second communication device comprising:
reception means for receiving, from a first communication device, a first message for requesting a report of a data transmission status in a plurality of data radio bearers among first bearers representing data radio bearers established in relation to the first communication device; and
transmission means for transmitting, to the first communication device, a third message for reporting, for at least one data radio bearer each, the data transmission status for data radio bearers from which a report of the data transmission status is requested based on the first message.

18. The second communication device according to claim 17, wherein the third message is a downlink data delivery status message.

19. A method comprising:
generating a first message for requesting a report of a data transmission status in a plurality of data radio bearers among first bearers representing data radio bearers established in relation to a second communication device; and
transmitting the first message to the second communication device.

20. A method comprising:
receiving, from a first communication device, a first message for requesting a report of a data transmission status in a plurality of data radio bearers among first bearers representing data radio bearers established in relation to the first communication device; and
transmitting, to the first communication device, a third message for reporting, for at least one data radio bearer each, the data transmission status for data radio bearers from which a report of the data transmission status is requested based on the first message.

21. A recording medium recording a program causing a computer to execute processing of:
generating a first message for requesting a report of a data transmission status in a plurality of data radio bearers among first bearers representing data radio bearers established in relation to a second communication device; and
transmitting the first message to the second communication device.

22. A recording medium recording a program causing a computer to execute processing of:
receiving, from a first communication device, a first message for requesting a report of a data transmission status in a plurality of data radio bearers among first bearers representing data radio bearers established in relation to the first communication device; and
transmitting, to the first communication device, a third message for reporting, for at least one data radio bearer each, the data transmission status for data radio bearers from which a report of the data transmission status is requested based on the first message.
